# EUROPEAN PATENT APPLICATION

(11) **EP 1 357 449 A1**
(43) Date of publication of application: **29.10.2003**
(21) Application number: 03075965.8
(22) Date of filing: 02.04.2003
(51) Int. Cl.: G05B 19/4097

(54) **Method for modeling complex, three dimensional tool paths through a workpiece**

(30) Priority: 26.04.2002 US 375787 P; 05.02.2003 US 358874
(71) Applicant: Delphi Technologies, Inc., Troy, MI 48007 (US)
(72) Inventor: Thomas, Steven M., Saginaw, MI 48609 (US); Landers, Diane M., Frankenmuth, MI 48734 (US)
(74) Representative: Denton, Michael John

(57) **Abstract**

A method (100) for modeling a three-dimensional tool path (202) through a virtual workpiece (300) is disclosed. In an exemplary embodiment, the method (100) includes creating (102) a three-dimensional tool model (200) and defining (104) a tool path (202) through the virtual workpiece (300). A plurality of two-dimensional slices is then created (108) from the three-dimensional tool model (200), and each of the plurality of two-dimensional slices is passed (110) along the tool path (202) and through the virtual workpiece (300). Material from the virtual workpiece (300) coming into contact with each of the plurality of two-dimensional slices passed therethrough is subtracted from the virtual workpiece (300).

## Description

### BACKGROUND

The present disclosure relates generally to computer aided design and manufacturing (CAD/CAM) and, more particularly, to a method for modeling complex, three dimensional tool paths through a workpiece.

In numerically controlled (NC) milling technology, a tool or cutter is directed through a set of pre-recorded sequential trajectories to fabricate a desired shape from raw stock. This technology is capable of producing free-formed, sculptured surfaces while maintaining tight milling error tolerances. Consequently, NC milling technology is widely used in the production of complicated, high-precision products such as molds, dies, aerospace parts, etc. These products, especially molds and dies, typically influence many other subsequent production processes. In order to improve the accuracy and reliability of NC milling, certain verification methods are used to check milling tool paths for potential problems such as milling error, collision, and improper machining parameters, among others. Analytical methods are implemented to graphically simulate the milling process off-line and, in some cases, verify milling error, tool assembly collision, and other machining parameters. Thus, NC programmers can visualize the shape of milled parts and understand potential problems in an efficient, less expensive, and more accurate way.

Direct solid modeling is one approach used in simulating the material removal process, implemented through direct Boolean difference operations between a solid model of the workpiece and solid models of swept volumes of the milling tool. The milling process may be realistically simulated, resulting in an explicit solid model of the milled workpiece that may be graphically presented and reviewed. Since the milled part is explicitly defined by a solid representation, a subsequent analysis and computation of milling error, volume removal rate, or milling dynamics can be readily performed. Although the direct solid modeling approach is theoretically capable of presenting accurate results of NC verification, the applications thereof remain limited. Generally, such limitations result from the complexity of Boolean difference operations between solid entities. The Boolean difference operation requires computation of the intersection between the shells of two solid entities.

Another approach is to represent simple three-dimensional tool shapes (e.g., spheres, cylinders) as a two-dimensional profile that is extruded through a workpiece to provide a real world representation. However, such a simple profile extrusion becomes inapplicable when the tool shape and the tool path are complex. Accordingly, it is desirable to be able to simulate the material removal process for complex tool shapes and paths while overcoming the above limitations.

### SUMMARY

The above discussed and other drawbacks and deficiencies of the prior art are overcome or alleviated by a method for modeling a three-dimensional tool path through a workpiece. In an exemplary embodiment, the method includes creating a three-dimensional tool model and defining a tool path through the workpiece. A plurality of two-dimensional slices is then created from the three-dimensional tool model, and each of the plurality of two-dimensional slices is passed along the tool path and through the workpiece. Material from the workpiece coming into contact with each of the plurality of two-dimensional slices passed therethrough is subtracted from the workpiece.

In a preferred embodiment, the method further includes positioning the three-dimensional tool model at one end of the tool path prior to creating the plurality of two-dimensional slices. The plurality of two-dimensional slices are taken along corresponding slice planes, each of the slice planes being parallel to one another. In addition, the three-dimensional tool model is positioned at said one end of the tool path at a reference point on the three-dimensional tool model.

### BRIEF DESCRIPTION OF THE DRAWINGS

Referring to the exemplary drawings wherein like elements are numbered alike in the several Figures:
Figure 1 is a block diagram illustrating a method for modeling complex, three dimensional tool paths through a workpiece, in accordance with an embodiment of the invention;
Figure 2(a) is a perspective view of an irregularly shaped, exemplary three dimensional tool model used in accordance with the method shown in Figure 1;
Figure 2(b) is another perspective view of the tool model of Figure 2(a), shown with a series of exemplary slices taken across slice planes thereof;
Figure 2(c) is a side view illustrating the slice planes of Figure 2(b);
Figure 3(a) is a perspective view of an exemplary workpiece prior to material removal; and
Figure 3(b) is a perspective view of the workpiece of Figure 3(a), following the simulated removal material in accordance with the method shown in Figure 1.

### DETAILED DESCRIPTION

Disclosed herein is a method for computer modeling of complex, three dimensional tool paths through a workpiece. Briefly stated, a three dimensional (3D) tool model of complex shape is broken down into a series of two dimensional (2D)"slices" or layers. The slices are then each swept along a defined tool path and through the workpiece. With the passing of each slice, material that the slice intersects with on the workpiece is subtracted (i.e., removed). The greater the number of 2D slices used, the greater the accuracy of the model since, as the number of 2D slices approaches infinity, the tool representation becomes a true 3D solid.

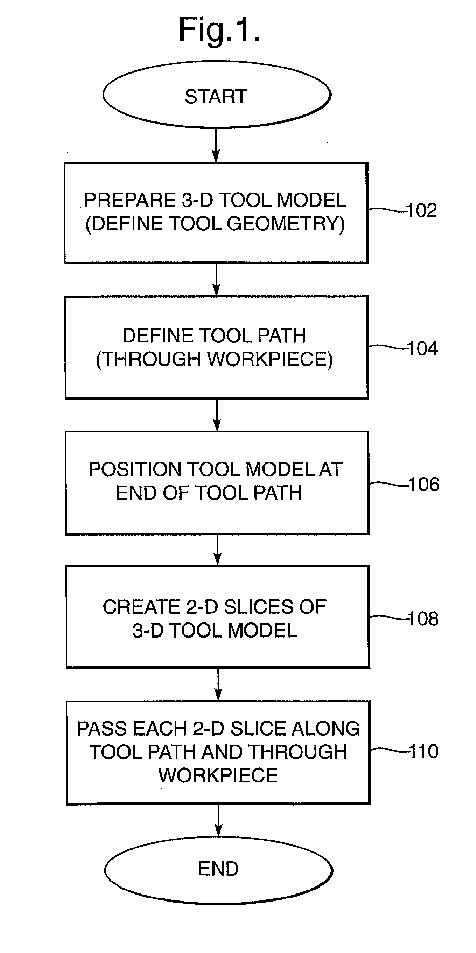

Referring initially to Figure 1, there is shown a block diagram that illustrates a method 100 for modeling complex, three dimensional tool paths through a virtual workpiece or 3D solid model representative of an actual workpiece. At block 102, a three dimensional tool model is computer generated and the tool geometry is defined. Then, a tool path for the tool model is defined with respect to the virtual workpiece, as shown in block 104. At block 106, the tool model is positioned at a first end of the tool path such that a reference point on the tool model corresponds to the point at the first end of the tool path.

Once the tool model is positioned, a series of individual, 2D slices are created along the 3D model, as shown in block 108. In a preferred embodiment, the 2D slices are taken along parallel planes with respect to one another. However, this need not be the case. For example, radial, irregular or non-parallel 2D slices may be appropriate, depending upon the specific tool path through the virtual workpiece.

Finally, each 2D slice created above is passed along the tool path and through the virtual workpiece, as shown in block 110. The material within the workpiece that each 2D slice comes into contact with as it is swept along the tool path is subtracted. After the last 2D slice has been swept along the tool path, the material removal simulation is complete. Again, the particular level of accuracy of the simulation will depend upon how many 2D slices are used. Generally speaking, the desired number of 2D slices will depend upon the particular project associated with the virtual machining. However, the greater the number of slices used, the slower the processing time of the computer.

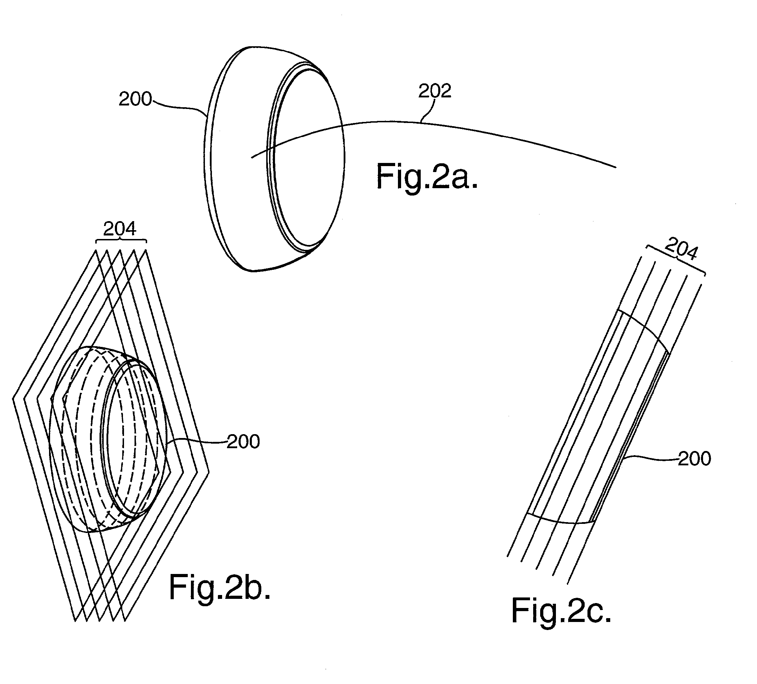

The above described method is more easily understood with reference to an exemplary "virtual" 3D tool 200, as is shown in Figures 2(a) through (c). More particularly, Figure 2(a) shows a perspective view of an irregularly shaped, 3D tool model 200. A determined tool path 202 is delineated from a reference point on one face of the tool model 200. In Figure 2(b), there is shown another perspective view of the tool model 200, along with a series of exemplary slices taken across slice planes 204. For ease of illustration, only five slice planes 204 are depicted. However, it should be appreciated that greater number of actual slices will be used to provide the degree of accuracy required in the simulation. In Figure 2(c), the slice planes 204 are shown in a side view thereof to illustrate the irregular shape of the tool model 200.

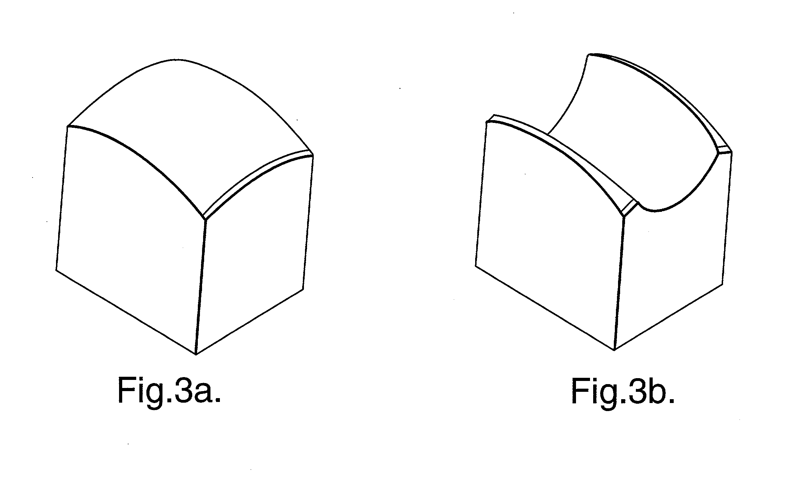

Finally, Figure 3(a) illustrates an exemplary model of a workpiece or virtual workpiece 300 prior to the passing of the slice planes 204 therethrough along the tool path 202. The end result of the simulated removal process of material in accordance with method 100 is shown in Figure 3(b).

It should be pointed out that the addition, creation and manipulation of the virtual tool, virtual workpiece and slice planes may be done by conventional associative means, characteristic of a "vertical modeling" system. In such a system, modeling elements such as datum planes are created in reference to a base or parent feature. The datum planes, in turn, may be used to define placement and positioning references for other modeling elements such as positioning planes or form features. However, the removal of a parent feature results in the loss of association between subsequently designed child features and the parent feature, which, in turn, results in the loss of any additional features that are subsequently associated to the child features. Thus, any modifications of certain features using vertical modeling principals may require additional effort, due to the fact that if a parent feature is edited, then all children of the parent feature need to be edited as well.

In contrast, a horizontally structured modeling of the planes allows for the independent addition or subtraction of additional features. Such a horizontally structured coordinate system facilitates model generation wherein a feature is placed and positioned independently according to subsequently constrained references (e.g., coordinate system(s), datums, and the like). If a parent feature is removed, there will be no loss of any associated child features therewith. This independence of the various modeling elements also allows for the addition, subtraction, and reordering of new or existing modeling elements. Additional information regarding horizontally structured CAD/CAM and modeling systems may be found in commonly assigned U.S. Patent , U.S. Patent Application Serial Number 09/483,722 by Khurana et al., and U.S. Patent , U.S. Patent Application Serial Number 09/483301, by Khurana et al. the contents of which are incorporated herein by reference in their entirety. Additional features of horizontally structured modeling are described in commonly assigned United States Patent No. , United States Patent Application Serial No. 10/032,960, Publication No. US 2002-0133803 A1 filed October 24, 2001, entitled "Enhancement to Horizontally-Structured CAD/CAM Modeling", by Diane M. Landers et al. and United States Patent No. , United States Patent Application Serial No. 10/033,163, filed October 24, 2001, Attorney Docket No. DP-304037, Publication No. US 2002-0133267 A1 entitled "Enhancement to Horizontally Structured Manufacturing Process Modeling", by Diane M. Landers et al., the disclosures of which are incorporated by reference herein in their entirety.

In addition, the disclosed invention may be embodied in the form of computer-implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or as data signal transmitted whether a modulated carrier wave or not, over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While the invention has been described with reference to a preferred embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (100) for modeling a three-dimensional tool path (202) through a virtual workpiece (300), the method (100) comprising:
creating (102) a three-dimensional tool model (200);
defining (104) a tool path (202) through the virtual workpiece (300);
creating (108) a plurality of two-dimensional slices from said three-dimensional tool model (200); and
passing (110) each of said plurality of two-dimensional slices along said tool path (202) and through the virtual workpiece (300);
wherein material from the virtual workpiece (300) coming into contact with each of said plurality of two-dimensional slices passed therethrough is subtracted from the virtual workpiece (300).

2. The method (100) of claim 1, further comprising positioning said three-dimensional tool model (200) at one end of said tool path (202) prior to creating said plurality of two-dimensional slices.

3. The method (100) of claim 2, wherein said plurality of two-dimensional slices are taken along corresponding slice planes (204), each of said slice planes (204) being parallel to one another.

4. The method (100) of claim 2, wherein said three-dimensional tool model (200) is positioned at said one end of said tool path (202) at a reference point on said three-dimensional tool model (200).

5. A storage medium, comprising:
a machine readable computer program code for modeling a three-dimensional tool path (202) through a virtual workpiece (300); and
instructions for causing a computer to implement a method (100), the method (100) further comprising:
creating (102) a three-dimensional tool model (200);
defining (104) a tool path (202) through the virtual workpiece (300);
creating (108) a plurality of two-dimensional slices from said three-dimensional tool model (200); and
passing (110) each of said plurality of two-dimensional slices along said tool path (202) and through the workpiece (300);
wherein material from the virtual workpiece (300) coming into contact with each of said plurality of two-dimensional slices passed therethrough is subtracted from the virtual workpiece (300).

6. The storage medium of claim 5, further comprising positioning said three-dimensional tool model (200) at one end of said tool path (202) prior to creating said plurality of two-dimensional slices.

7. The storage medium of claim 6, wherein said plurality of two-dimensional slices are taken along corresponding slice planes (204), each of said slice planes (204) being parallel to one another.

8. The storage medium of claim 6, wherein said three-dimensional tool model (200) is positioned at said one end of said tool path (202) at a reference point on said three-dimensional tool model (200).

9. A computer data signal, comprising:
code configured to cause a processor to implement a method (100) for modeling a three-dimensional tool path (202) through a virtual workpiece (300), the method (100) further comprising:
creating (102) a three-dimensional tool model (200);
defining (104) a tool path (202) through the virtual workpiece (300);
creating (108) a plurality of two-dimensional slices from said three-dimensional tool model (200); and
passing (110) each of said plurality of two-dimensional slices along said tool path (202) and through the virtual workpiece (300);
wherein material from the workpiece (300) coming into contact with each of said plurality of two-dimensional slices passed therethrough is subtracted from the virtual workpiece (300).

10. The computer data signal of claim 9, further comprising positioning said three-dimensional tool model (200) at one end of said tool path (202) prior to creating said plurality of two-dimensional slices.

11. The computer data signal of claim 10, wherein said plurality of two-dimensional slices are taken along corresponding slice planes (204), each of said slice planes (204) being parallel to one another.

12. The computer data signal of claim 10, wherein said three-dimensional tool model (200) is positioned at said one end of said tool path (202) at a reference point on said three-dimensional tool model (200).
